(19) Europäisches Patentamt / European Patent Office / Office européen des brevets

(11) **EP 3 827 220 B1**

(12) **FASCICULE DE BREVET EUROPEEN**

(45) Date de publication et mention de la délivrance du brevet:
**06.07.2022 Bulletin 2022/27**

(21) Numéro de dépôt: **19759646.3**

(22) Date de dépôt: **23.07.2019**

(51) Classification Internationale des Brevets (IPC):
***G01C 21/00*** *(2006.01)*

(52) Classification Coopérative des Brevets (CPC):
**G01C 21/00**

(86) Numéro de dépôt international:
**PCT/FR2019/051827**

(87) Numéro de publication internationale:
**WO 2020/021195 (30.01.2020 Gazette 2020/05)**

(54) **PROCÉDÉ ET DISPOSITIF D'AIDE À LA NAVIGATION D'UNE FLOTTE DE VÉHICULES À L'AIDE D'UN FILTRE DE KALMAN INVARIANT**

VERFAHREN UND VORRICHTUNG ZUR UNTERSTÜTZUNG BEI DER NAVIGATION EINER FLOTTE VON FAHRZEUGEN MITTELS INVARIANTEM KALMAN-FILTER

METHOD AND DEVICE FOR ASSISTING WITH THE NAVIGATION OF A FLEET OF VEHICLES USING AN INVARIANT KALMAN FILTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.07.2018 FR 1856803**

(43) Date de publication de la demande:
**02.06.2021 Bulletin 2021/22**

(73) Titulaire: **SAFRAN**
**75015 Paris (FR)**

(72) Inventeur: **BARRAU, Axel**
**77550 Moissy-Cramayel (FR)**

(74) Mandataire: **Regimbeau**
**20, rue de Chazelles**
**75847 Paris Cedex 17 (FR)**

(56) Documents cités:
- **Solmaz S Kia ET AL: "Cooperative localization for mobile agents: a recursive decentralized algorithm based on Kalman filter decoupling", , 21 mai 2015 (2015-05-21), XP055595143, Extrait de l'Internet: URL:https://arxiv.org/pdf/1505.05908.pdf [extrait le 2019-07-01]**
- **DANPING ZOU ET AL: "CoSLAM: Collaborative Visual SLAM in Dynamic Environments", IEEE TRANSACTIONS ON PATTERN ANALYSIS AND MACHINE INTELLIGENCE, IEEE COMPUTER SOCIETY, USA, vol. 35, no. 2, 1 février 2013 (2013-02-01), pages 354-366, XP011490796, ISSN: 0162-8828, DOI: 10.1109/TPAMI.2012.104 cité dans la demande**
- **MAHMOUD MAGDI S ET AL: "Distributed Kalman filtering: a bibliographic review", IET CONTROL THEORY AND APPLICAT, THE INSTITUTION OF ENGINEERING AND TECHNOLOGY, GB, vol. 7, no. 4, 7 mars 2013 (2013-03-07), pages 483-501, XP006045415, ISSN: 1751-8644, DOI: 10.1049/IET-CTA.2012.0732**

**EP 3 827 220 B1**

**Description**

**DOMAINE DE L'INVENTION**

La présente invention concerne un procédé d'aide à la navigation d'une flotte de véhicules, et un dispositif adapté pour mettre en œuvre un tel procédé.

**ETAT DE LA TECHNIQUE**

Le problème de l'estimation de l'état d'un système physique se pose en général de la façon suivante. L'état du système à un instant n est représenté par un vecteur $X_n$, et une observation disponible à l'instant n est représentée par un autre vecteur $Y_n$. L'évolution du système s'écrit :

$$X_{n+1} = f(X_n)$$

où $f$ est une fonction connue (généralement appelée fonction de propagation). Les observations $Y_n$ sont reliées à l'état du système par une fonction d'observation h connue:

$$Y_n = h(X_n)$$

Construire une bonne estimation $\hat{X}_n$ de l'état $X_n$ à partir de la séquence $(Y_n)_{n \geq 0}$ est en général un problème difficile, pouvant néanmoins être simplifié dans certains cas.

On appelle « systèmes linéaires » le cas particulier des systèmes de la forme :

$$X_{n+1} = F X_n + w_n$$

$$Y_n = H X_n + V_n$$

où F est une matrice de propagation, $H$ est une matrice d'observation, $w_n$ et $V_n$ sont des bruits venant perturber les prédictions et les mesures.

Dans ce cas linéaire, une méthode connue consiste à construire un estimateur désigné sous le nom de filtre de Kalman. Ce filtre de Kalman met en œuvre les calculs suivants :

$$\hat{X}_{n+1|n} = F \hat{X}_{n|n}$$

$$\hat{X}_{n+1|n+1} = \hat{X}_{n+1|n} + K_{n+1}\left(Y_{n+1} - H \hat{X}_{n+1|n}\right)$$

où les indices $n+1|n$ et $n + 1 | n + 1$ désignent respectivement l'estimation calculée à l'instant n + 1 sans tenir compte de l'observation $Y_{n+1}$ et à l'instant $n + 1$ en tenant compte de l'observation $Y_{n+1}$. La matrice $K_n$ est appelée « matrice de gains », elle peut être calculée à l'aide d'une équation de Riccati. L'erreur d'estimation est alors définie comme :

$$e_{n|n} = X_n - \hat{X}_{n|n}$$

(après la prise en compte de l'observation $Y_n$)

$$e_{n+1|n} = X_{n+1} - \hat{X}_{n+1|n}$$

(avant la prise en compte de l'observation $Y_{n+1}$)

On peut facilement vérifier que cette erreur suit l'évolution suivante :

$$e_{n+1|n} = F e_{n|n}$$

(avant la prise en compte de l'observation $Y_{n+1}$)

$$e_{n+1|n+1} = (I - K_{n+1} H) e_{n+1|n}$$

(après la prise en compte de l'observation $Y_{n+1}$) où $I$ désigne la matrice identité.

Les équations ci-dessus ne dépendent pas de $X_n$, on peut donc construire un estimateur fonctionnant pour toute trajectoire réelle du système, ce qui n'est pas le cas pour un système non-linéaire quelconque.

Dans le cas d'un système non linéaire, un filtre de Kalman ordinaire ne peut être mis en œuvre. Il a ainsi été proposé une variante du filtre de Kalman appelée filtre de Kalman « étendu », lequel est adapté à un système non linéaire. Toutefois, lorsqu'un filtre de Kalman étendu est utilisé, les simplifications constatées dans le cas linéaire ne se produisent plus, si bien qu'on obtient une équation d'erreur faisant intervenir $X_n$ et $\hat{X}_n$. Ce problème est à l'origine de la plupart des cas de divergence que l'on rencontre lorsque l'on utilise un filtre de Kalman étendu.

Néanmoins, un deuxième cas particulier rendant le problème d'estimation plus facile est celui des systèmes d'observation « groupe-affines », c'est-à-dire les systèmes pour lesquels on dispose d'une loi de groupe (c'est-à-dire une loi de composition interne que l'on notera dans la suite par une étoile *) définie sur l'espace de l'état considéré et telle que les deux propriétés suivantes soient vérifiées :

a. La fonction de propagation f vérifie pour tout couple $a, b$ d'éléments de l'espace d'état la relation :

$$f(a * b) = f(a) * f(Id)^{-1} * f(b)$$

Où $Id$ est l'élément identité du groupe induit par la loi *.

b. La fonction d'observation $h$ est de la forme $h(X) = l(x, y_0)$, avec $y_0$ un élément de l'espace des observations (auquel appartiennent les $Y_n$) et $l(.,.)$ une action de groupe, c'est-à-dire une fonction vérifiant

$$l(a * b, y) = l\big(a, l(b, y)\big)$$

Sous ces deux conditions, on peut définir un filtre de Kalman étendu dit « invariant » (généralement appelé plus simplement « filtre de Kalman invariant ») qui est régi par les équations suivantes :

$$\hat{X}_{n+1|n} = f\big(\hat{X}_{n|n}\big)$$

$$\hat{X}_{n+1|n+1} = \hat{X}_{n+1|n} * \exp\big(K_n \big[l\big(\hat{X}_{n+1|n}^{-1}, Y_{n+1}\big) - l(Id, y_0)\big]\big)$$

où $\exp(\cdot)$ est l'application exponentielle (cette fonction est connue dès que l'opération de groupe est connue, si elle définit un groupe de Lie) et $K_n$ est une « matrice de gain » comme dans le cas linéaire. On peut alors montrer que l'erreur d'estimation aura là aussi une évolution autonome, comme dans le cas linéaire. Le problème d'estimation de l'état est donc simplifié, et ce même si le système considéré n'est pas linéaire.

Lorsque la condition b. n'est pas vérifiée on peut utiliser un filtre de la forme :

$$\hat{X}_{n+1|n} = f\big(\hat{X}_{n|n}\big)$$

$$\hat{X}_{n+1|n+1} = \hat{X}_{n+1|n} * \exp\big(K_{n+1} \big[Y_{n+1} - h\big(\hat{X}_{n+1|n}\big)\big]\big)$$

Des filtres de Kalman invariants ont ainsi été utilisés pour aider à la navigation d'un porteur. Un filtre de Kalman invariant utilisé dans un tel contexte d'aide à la navigation estime un état de navigation représentatif d'un mouvement du porteur considéré.

Comme expliqué précédemment, l'utilisation d'un filtre de Kalman invariant réclame de trouver une opération (ou loi de composition interne) * pour laquelle les conditions a. et b. sont vérifiées afin de rendre le problème de l'estimation plus facile. Il n'existe pas de méthode générique permettant de trouver une telle opération, et des publications diverses ont eu pour objet de fournir la bonne opération pour des systèmes particuliers. A titre d'exemples :

- L'opération à utiliser pour un problème d'estimation d'orientation et de vitesse est décrit dans le document suivant: Bonnabel, S., Martin, P., & Salaün, E. (2009, December). Invariant Extended Kalman Filter: theory and application to a velocity-aided attitude estimation problem. In Decision and Control, 2009 held jointly with the 2009 28th Chinese Control Conference. CDC/CCC 2009. Proceedings of the 48th IEEE Conférence on (pp. 1297-1304). IEEE.
- L'opération à utiliser pour une navigation inertielle avec estimation de l'orientation, la vitesse et la position est décrite dans le document suivant : Barrau, A., & Bonnabel, S. (2017). The invariant extended Kalman filter as a stable observer. IEEE Transactions on Automatic Control, 62(4), 1797-1812.
- L'opération à utiliser pour le SLAM (acronyme anglais de Simultaneous Localization And Mapping), c'est-à-dire une navigation utilisant des points de repère fixes de l'environnement du véhicule, est décrite dans le document Barrau, A., & Bonnabel, S. (2015). An EKF-SLAM algorithm with consistency properties. arXiv preprint arXiv: 1510.06263.
- Une liste de systèmes pratiques pour lesquels une opération est connue est en outre décrite dans le document Barrau, A., & Bonnabel, S. (2017). Linear observation systems on groups (I).

Dans chacune de ces applications, un filtre de Kalman invariant est utilisé pour estimer l'état de navigation d'un porteur unique.

Le document Zou, D., & Tan, P. (2013). Coslam: Collaborative visual slam in dynamic environments. IEEE transactions on pattern analysis and machine intelligence, 35(2), 354-366 poursuit un autre objectif : celui de fournir une aide à la navigation non pas d'un porteur unique, mais d'une flotte de véhicules comprenant un véhicule principal et au moins un véhicule secondaire mobile par rapport au véhicule principal.

L'utilisation de la connaissance de la position et orientation d'un autre agent mobile comme données du filtre de Kalman pour la navigation d'un autre agent mobile est divulguée dans le document Solmaz S Kia ET AL: "Coopérative localization for mobile agents: a recursive decentralized algorithm based on Kalman filter decoupling", 21 mai 2015.

Dans chacune de ces applications, le filtre de Kalman utilise des données proprioceptives du véhicule complétées par des mesures relatives à des objets de l'environnement considérés comme fixes (points de repère visuels connus ou inconnus, champ magnétique terrestre, Terre elle-même, etc.). Les coordonnées de ces objets peuvent être connues ou non dans le repère de référence, mais dans tous les cas elles ne varient pas au cours du temps. Toutefois, cette hypothèse ne tient plus si le porteur est entouré d'autres véhicules potentiellement en mouvement.

## EXPOSE DE L'INVENTION

Un but de l'invention est de fournir une aide à la navigation d'une flotte de plusieurs véhicules simple à mettre en œuvre.

Il est dès lors proposé, selon un premier aspect de l'invention, un procédé d'aide à la navigation d'une flotte de véhicules comprenant un véhicule principal et un véhicule secondaire mobile par rapport au véhicule principal, le procédé comprenant des étapes de :

- réception de données acquises par au moins un capteur, les données reçues comprenant des données cinématiques relatives entre le véhicule principal et le véhicule secondaire,
- estimation d'un état de navigation de la flotte de véhicules par un filtre de Kalman invariant utilisant les données reçues comme observations, dans lequel l'état de navigation comprend

  o des premières variables représentatives d'une première transformation rigide liant un repère attaché au véhicule principal à un repère de référence et
  o des deuxièmes variables représentatives d'une deuxième transformation rigide liant un repère attaché au véhicule principal à un repère attaché au véhicule secondaire,

et dans lequel le filtre de Kalman invariant utilise comme loi de composition interne une loi comprenant une composition terme à terme de la première transformation rigide et de la deuxième transformation rigide.

Le procédé selon le premier aspect de l'invention proposé exploite avantageusement le fait que les porteurs entourant le porteur principal disposent eux aussi de capteurs de mouvement et qu'ils transmettent leurs mesures au porteur principal. Ces mesures permettront au porteur principal d'utiliser les porteurs qui l'entourent comme points de repère bien que ceux-ci soient mobiles.

Il se trouve par ailleurs que la loi de composition interne utilisée dans ce procédé permet de s'approcher des conditions a. et b. énoncées en introduction. Les calculs mis en œuvre par le filtre de Kalman invariant sont donc particulièrement simples à mettre en œuvre.

Le procédé selon le premier aspect de l'invention peut comprendre les caractéristiques suivantes prises seules ou en combinaison lorsque cela est techniquement possible.

De préférence, l'état de navigation de la flotte comprend en outre au moins un état d'erreur propre au capteur, et dans lequel la loi de composition interne est additive pour cette variable d'erreur propre au capteur.

De préférence, le procédé comprend la réception de données de mouvement proprioceptif du véhicule principal et du véhicule secondaire, dans lequel l'estimation comprend des phases de

- propagation d'un état de navigation de la flotte préalablement estimé par le filtre de Kalman invariant à l'aide des données de mouvement proprioceptif du véhicule principal et du véhicule secondaire pour obtenir un état propagé,
- mise à jour de l'état propagé à l'aide des observations, pour obtenir un nouvel état de navigation de la flotte.

De préférence, les données de mouvement proprioceptif sont acquises par des capteurs proprioceptifs respectifs du véhicule principal et du véhicule secondaire, et l'état de navigation de la flotte comprend en outre au moins un état d'erreur propre à au moins un des capteurs proprioceptifs pour laquelle la loi de composition interne est additive.

De préférence :

- les premières variables comprennent une matrice de rotation représentant une orientation du véhicule principal et un vecteur de position du véhicule principal, et
- dans lequel les deuxièmes variables comprennent une matrice de rotation représentant l'orientation du véhicule principal par rapport au véhicule secondaire et un vecteur de position du véhicule principal par rapport au véhicule secondaire.

De préférence :

- l'état de navigation de la flotte comprend en outre un vecteur de vitesse $v_p$ du véhicule principal dans le repère de référence, et un vecteur de vitesse égal à

$$R_S^T(v_P - v_S)$$

, où $v_s$ est une vitesse du véhicule secondaire dans le repère de référence, et $R_S$ est une matrice de rotation représentant l'orientation du véhicule principal par rapport au véhicule secondaire,
- la loi de composition interne applique des transformations identiques à l'un des vecteurs de position et l'un des vecteurs vitesse.

L'estimation peut être mise en œuvre par le véhicule principal, et les données reçues peuvent comprendre des données de position du véhicule secondaire dans un repère fixé au véhicule principal acquises par au moins un premier capteur du véhicule principal comprenant par exemple un lidar, une caméra ou un odomètre. En variante, l'estimation peut être mise en œuvre par le véhicule principal, et les données reçues peuvent comprendre des données de position du véhicule principal dans un repère fixé au véhicule secondaire acquises par au moins un deuxième capteur du véhicule secondaire comprenant par exemple un lidar, une caméra ou un odomètre.

Les données reçues peuvent comprendre des données cinématiques relatives entre le véhicule principal et un objet tiers distinct du véhicule principal et du véhicule secondaire, les données cinématiques relatives entre le véhicule principal et l'objet tiers étant également utilisées comme observations par le filtre de Kalman invariant. L'objet tiers est par exemple un amer.

Les données cinématiques relatives entre le véhicule principal et un objet tiers peuvent comprendre des données acquises par un récepteur GPS/GNSS du véhicule principal.

De préférence, le procédé comprend des étapes de

- mise en œuvre de l'étape d'estimation sur la base des données de position de l'objet secondaire dans le repère fixé au véhicule principal de sorte générer une première estimation de l'état de navigation de la flotte,
- mise en œuvre de l'étape d'estimation sur la base des données de position du véhicule principal dans un repère fixé à l'objet secondaire, de sorte générer une deuxième estimation de l'état de navigation de la flotte,
- fusion des première et deuxième estimations de l'état de navigation de la flotte, de sorte à produire une troisième estimation de l'état de navigation la flotte, la fusion comprenant par exemple le calcul d'une moyenne des première et deuxième estimations de l'état de navigation de l'ensemble d'objets.

Afin de rendre l'évolution de l'erreur indépendante de l'état du système, il est de préférence prévu ce qui suit :

- les données reçues utilisées comme observations s'écrivent comme un vecteur $Y_1$ de la forme $Y_1 = l(X_1, y_0)$, où $l(.,.)$ est une action de groupe à gauche pour la loi de composition interne, $X_1$ est l'état de navigation de la flotte, et $y_0$ est un vecteur de même dimension que $Y_1$, et dans lequel le filtre de Kalman invariant utilise une innovation $Z = l\left(\hat{X}_1^{-1}, Y_1\right)$, ou dans lequel

- les données reçues utilisées comme observations s'écrivent comme un vecteur $Y_2$ de la forme $Y_2 = l(X_2^{-1}, y_0))$ où $l(.,.)$ est une action de groupe à gauche pour la loi de composition interne, $X_2$ est l'état de navigation de la flotte, et $y_0$ est un vecteur de même dimension que $Y_2$, et dans lequel le filtre de Kalman invariant utilise une innovation $Z = l(\hat{X}_2, Y_2)$.

Il est également proposé selon un deuxième aspect de l'invention un dispositif d'aide à la navigation d'une flotte de véhicules comprenant un véhicule principal et un véhicule secondaire mobile par rapport au véhicule principal, le dispositif comprenant :

- une interface de réception pour recevoir des données acquises par au moins un capteur, les données comprenant des données cinématiques relatives entre le véhicule principal et le véhicule secondaire,
- une unité de traitement configurée pour mettre en œuvre un filtre de Kalman invariant de manière à estimer un état de navigation de la flotte de véhicules, dans lequel le filtre de Kalman invariant est configuré pour utiliser les données reçues comme observations, dans lequel l'état de navigation comprend des premières variables représentatives d'une première transformation rigide liant un repère attaché au véhicule principal à un repère de référence et des deuxièmes variables représentatives d'une deuxième transformation rigide liant un repère attaché au véhicule secondaire à un repère attaché au véhicule principal, et dans lequel le filtre de Kalman invariant est configuré pour utiliser comme loi de composition interne une composition terme à terme de la première transformation rigide et de la deuxième transformation rigide.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 illustre différents objets mobiles les uns par rapport aux autres, notamment une flotte de véhicules.
- La figure 2 illustre de façon schématique des composants interne d'un véhicule principal et d'un véhicule secondaire d'une flotte de véhicules, selon un mode de réalisation de l'invention.
- La figure 3 est un organigramme d'étapes d'un procédé d'aide à la navigation, selon un mode de réalisation de l'invention.

Sur l'ensemble des figures, les éléments similaires portent des références identiques.

## DESCRIPTION DETAILLEE DE L'INVENTION

### 1/ Flotte de véhicules

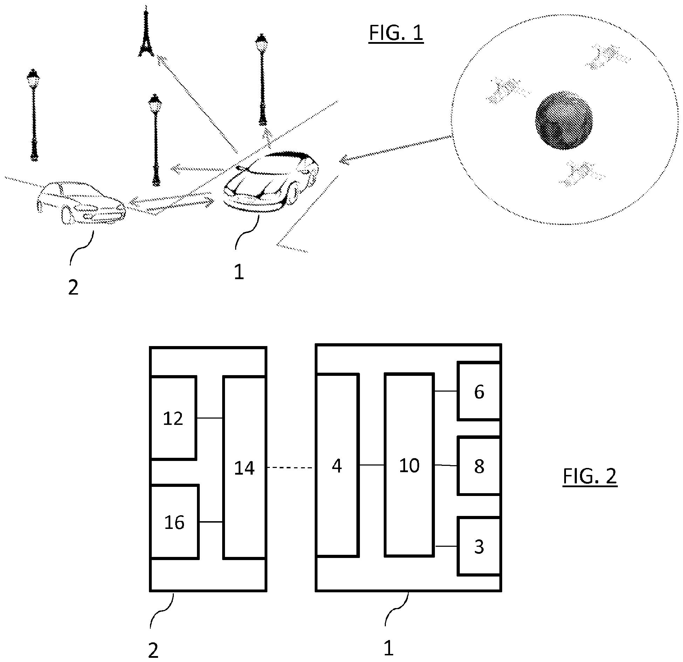

En référence à la **figure 1,** une flotte de véhicules comprend un véhicule principal 1 et au moins un véhicule secondaire 2 mobile par rapport au véhicule principal 1. Chaque véhicule 1, 2 peut être de tout type : véhicule terrestre, navire, aéronef, etc.

Est également représenté sur la figure 1 des objets extérieurs à la flotte de véhicules : des amers (lampadaires et tour Eiffel), ainsi que la Terre elle-même. Comme on le verra dans la suite ces objets sont des points de repère pour la navigation de la flotte.

Dans ce qui suit, on considère différents repères : un repère principal attaché au véhicule principal 1, un repère secondaire attaché au véhicule secondaire 2, et un repère de référence. Le repère de référence est par exemple un repère céleste attaché à des étoiles ou à la Terre.

En référence à la **figure 2,** le véhicule principal 1 comprend une interface de réception de données.

L'interface de réception comprend au moins un premier capteur 3 embarqué dans le véhicule principal 1. Ce premier capteur 3 est configuré pour acquérir des données cinématiques du véhicule secondaire 2 dans le repère principal. Le premier capteur 3 comprend par exemple un lidar, une caméra ou un odomètre.

Dans le présent texte, on considère que l'expression « données cinématiques » couvre notamment des positions, des vitesses, ou des accélérations.

L'interface de réception comprend également une interface de communication 4 adaptée pour communiquer avec le véhicule secondaire 2, notamment recevoir de ce dernier des données cinématiques du véhicule principal 1 dans le repère fixé au véhicule secondaire 2. L'interface de communication 4 est de type radio sans fil, et comprend par exemple une antenne.

Le véhicule principal 1 comprend par ailleurs au moins un capteur proprioceptif 6.

Le capteur proprioceptif 6 comprend par exemple une centrale inertielle. La centrale inertielle comprend une pluralité de capteurs inertiels tels que des gyromètres et des accéléromètres. En variante, le capteur proprioceptif 6 comprend au moins un odomètre.

Le véhicule principal 1 comprend en outre un récepteur 8 configuré pour acquérir des données cinématiques relatives entre le véhicule principal 1 et un objet tiers distinct du véhicule principal 1 et du véhicule secondaire 2. Ce récepteur est par exemple un récepteur GPS/GNSS, auquel cas l'objet tiers est la Terre ou l'une des étoiles auxquelles le repère céleste est attaché. En variante ou complément, ce récepteur comprend un lidar, une caméra, auquel cas l'objet tiers peut être un amer se trouvant à proximité du véhicule principal 1. Dans une autre variante, le récepteur comprend un odomètre qui une vitesse relative du porteur par rapport à la Terre.

Le véhicule principal 1 comprend par ailleurs une unité de traitement de données 10. L'unité de traitement 10 est agencée pour traiter des données reçues par l'interface de réception (donc reçues par le premier capteur 3 ou reçues par l'interface de communication 4), par la centrale inertielle 6, ou par le récepteur 8.

L'unité de traitement de données 10 comprend typiquement au moins un processeur configuré pour mettre en œuvre un procédé d'aide à la navigation qui sera décrit ci-après, au moyen d'un filtre de Kalman de type invariant. Le filtre de Kalman invariant se présente typiquement sous la forme d'un programme informatique exécutable par le processeur de l'unité de traitement de données. Le fonctionnement général d'un filtre de Kalman invariant est connu en lui-même. Toutefois, on verra dans la suite que la loi de composition interne utilisée pour configurer le filtre de Kalman invariant mis en œuvre par l'unité de traitement 10 est choisie de manière particulière, de manière à s'adapter au contexte de l'aide à la navigation de la flotte de véhicules comprenant les véhicules 1 et 2.

De préférence, l'unité de traitement 10 comprend au moins deux processeurs, de manière à mettre en œuvre deux filtres de Kalman en parallèle. On verra dans la suite que ces deux filtres de Kalman n'utilisent pas exactement les mêmes données d'entrée.

Par ailleurs, le véhicule secondaire 2 comprend au moins un deuxième capteur 12 et une interface de communication 14 pour transmettre des données acquises par le deuxième capteur 12 à l'interface de communication 4 du véhicule principal 1.

Le deuxième capteur 12 est configuré pour acquérir des données de mouvement du véhicule principal 1 dans le repère fixé au véhicule secondaire 2. Le deuxième capteur 12 comprend par exemple un lidar, une caméra ou un odomètre.

Le véhicule secondaire 2 comprend des moyens pour fournir des données de mouvement proprioceptif du véhicule secondaire.

Ces moyens de fourniture comprennent par exemple au moins un capteur proprioceptif 16. Le capteur proprioceptif est par exemple de l'un ou plusieurs des types de capteurs envisagés pour le capteur proprioceptif 6.

En variante, ces moyens de fourniture comprennent une mémoire mémorisant un modèle a priori d'évolution du véhicule secondaire 2. Cette mémoire peut être aussi bien être intégrée au véhicule secondaire 2 qu'au véhicule principal 1.

## 2/ Configuration du filtre de Kalman invariant

Le filtre de Kalman invariant mis en œuvre par l'unité de traitement 10 est configuré pour estimer un état de navigation de la flotte comprenant le véhicule principal 1 et le véhicule secondaire 2.

L'état de navigation comprend des premières variables représentatives d'une première transformation rigide liant le repère principal (attaché au véhicule principal 1 ) au repère de référence et des deuxièmes variables représentatives d'une deuxième transformation rigide liant le repère secondaire (attaché au véhicule secondaire 2) au repère principal.

La première transformation rigide permet par exemple de passer du repère lié au véhicule principale 1 au repère de référence, et la deuxième permet de passer du repère lié au véhicule principal 1 au repère lié au véhicule secondaire 2.

De façon bien connue, une transformation rigide (également connue sous le nom d'isométrie affine), est une transformation qui conserve les distances entre chaque paire de points d'un solide. Ainsi, chacune des première et deuxième transformations rigides peut être caractérisée par la composition d'une rotation et d'une translation.

Dans la suite, on détaillera un mode de réalisation dans lequel l'état de navigation, noté $X$, comprend les éléments suivants :

$$X = (R_p, x_p, R_{sp}, x_{sp})$$

où $R_p, x_p, R_{sp}, x_{sp}$ sont définis comme suit :

- $R_p$ et $x_p$ sont respectivement une matrice de rotation et un vecteur de dimension 3, représentant l'orientation et la position du véhicule principal : un vecteur u écrit dans le repère du véhicule principal 1 devient le vecteur $R_p u + x_p$ dans le repère fixe.
- $R_{sp}$ et $x_{sp}$ sont respectivement une matrice de rotation et un vecteur de dimension 3, représentant l'orientation et la position relatives du véhicule principal par rapport au véhicule secondaire : un vecteur u écrit dans le repère du véhicule principal 1 devient le vecteur $R_{sp} u + x_{sp}$ dans le repère du véhicule secondaire.

Dans ce mode de réalisation particulier, les premières variables sont $R_p$, $x_p$ et les deuxièmes variables sont $R_{sp}$, $x_{sp}$.

L'expression « l'objet X' est de même nature que le vecteur d'état », utilisée plus bas, signifiera que X' est une succession de matrices et de vecteurs semblable à X.

On appellera aussi « dimension de l'état X » le nombre $3 \times (r + v) = 12$ où r est le nombre de matrices de rotation apparaissant dans X et v le nombre de vecteurs apparaissant dans X. Dans des modes de réalisation différents ce nombre peut être différent.

Par ailleurs, le filtre de Kalman invariant est en outre configuré pour utiliser comme observations des données cinématiques relatives entre le véhicule principal 1 et le véhicule secondaire 2 reçues par l'interface de réception, provenant du premier capteur 3 du véhicule principal 1.

L'observation sera ici la position relative du véhicule secondaire vue dans le repère du véhicule principal :

$$Y = -R_{sp}^T x_{sp}$$

Le filtre de Kalman invariant est configuré pour utiliser comme loi de composition interne une loi comprenant une composition terme à terme de la première transformation rigide et de la deuxième transformation rigide.

Cette loi de composition interne, notée *, applique la transformation suivante à deux objets $(R_p, x_p, R_{sp}, x_{sp})$ et $\left(R'_p, x'_p, R'_{sp}, x'_{sp}\right)$ dans un mode de réalisation :

$$\left(R_p, x_p, R_{sp}, x_{sp}\right) * \left(R'_p, x'_p, R'_{sp}, x'_{sp}\right) = \left(R_p R'_p, x_p + R_p x'_p, R_{sp} R'_{sp}, x_{sp} + R_{sp} x'_{sp}\right)$$

### 3/ Procédés d'aide à la navigation de la flotte

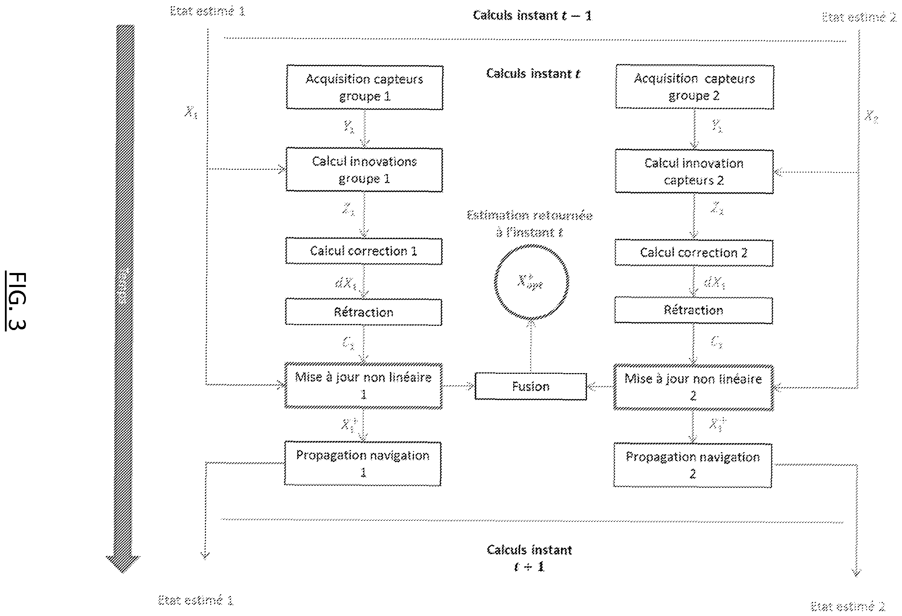

En référence à la **figure 3,** un procédé 100 d'aide à la navigation de la flotte selon un premier mode de réalisation, et mettant en œuvre un filtre de Kalman invariant configuré de la manière indiquée en section **2/,** comprend les étapes suivantes.

On suppose qu'une estimation $\hat{X}_1$ de l'état de navigation de la flotte a été estimée par le filtre de Kalman invariant.

Dans une étape d'acquisition 102, le premier capteur 3 acquiert un premier groupe de données $Y_1$ de mouvement d'objets extérieurs au véhicule principal 1 dans le repère principal. Ces données peuvent comprendre :

- des données de position du véhicule secondaire 2 dans le repère principal (l'objet extérieur correspondant est alors le véhicule secondaire 2)
- des données de position d'au moins un amer dans le repère principal (l'objet extérieur correspondant est alors cet amer). L'amer est de position connue dans le repère de référence.

Ces données $Y_1$ sont transmises à l'unité de traitement 10.

Dans une étape 104, l'unité de traitement 10 calcule la différence entre les mesures observées $Y_1$ et des mesures attendues (cette différence, notée $Z_1$, est appelée innovation dans la littérature traitant des filtres de Kalman). Les mesures attendues sont déduites de l'état $X_1$ précédemment estimé par le filtre de Kalman invariant.

Dans une étape de correction 106, l'unité de traitement 10 de données multiplie l'innovation $Z_1$ par une matrice $K_1$ dite de « gain », ce qui traduit $Z_1$ en une correction linéaire $dx_1 = K_1 Z_1$ à appliquer à l'état du système.

Le choix des gains est une question classique commune à la plupart des méthodes d'estimation (voir plus bas).

Dans une étape de rétraction 108, l'unité de traitement 10 transforme la correction linéaire $dx_1$ en une correction

non linéaire $C_1$ de même nature que $\hat{X}_1$ (l'état $\hat{X}_1$ n'est pas un vecteur car il contient des rotations). La transformation utilisée est une fonction quelconque prenant en argument un vecteur de la dimension de l'état $X$ (12 dans notre cas) et retournant un objet de même nature que X mais un choix particulièrement performant est l'exponentielle terme à terme du groupe de Lie des couples de transformations rigides.

Est ensuite mise en œuvre par l'unité de traitement 10 une étape de mise à jour non linéaire 110. Dans cette étape 110, l'unité de traitement 10 combine l'estimation $X_1$ de l'état du système à la correction non linéaire $C_1$ pour construire une estimation corrigée :

$$\hat{X}_1^+ = C_1 * \hat{X}_1$$

Où le symbole * est la loi composition interne définie plus haut. La matrice $K_1$ de gain est choisie de manière à stabiliser l'erreur d'estimation non linéaire e définie par :

$$e = \hat{X}_1 * X^{-1}$$

Où le symbole $\cdot^{-1}$ est l'inversion usuelle associée à la loi * :

$$\left(R_p, x_p, R_{sp}, x_{sp}\right)^{-1} = \left(R_p^T, -R_p^T x_p, R_{sp}^T, -R_{sp}^T x_{sp}\right)$$

On peut aussi écrire explicitement l'erreur de la façon suivante :

$$e = \left(\hat{R}_p R_p^T, \hat{x}_p - \hat{R}_p R_p^T x_p, \hat{R}_p R_p^T, \hat{x}_p - \hat{R}_p R_p^T x_p\right)$$

Cette erreur est utilisée pour construire le système linéarisé selon la procédure habituelle du filtrage invariant, duquel on déduit la matrice $K_1$, par exemple en intégrant une équation de Riccati.

Dans une étape de propagation 112, en soi connue de l'homme du métier, l'unité de traitement 10 génère un état de navigation propagé, à partir de l'état $X_1^+$. Pour cela, l'unité de traitement 10 applique le modèle d'évolution qui peut être par exemple une odométrie, un modèle a priori ou une intégration classique de mesures inertielles acquises par les capteurs proprioceptifs 6, 16 présents dans les véhicules 1, 2.

Les étapes décrites précédemment forment une itération du filtre de Kalman invariant.

On obtient grâce au filtre de Kalman invariant une propriété qu'on obtiendrait également dans un cas linéaire : l'évolution de l'erreur d'estimation est autonome (elle ne dépend ni de $X$ ni de $\hat{X}_1$).

L'unité de traitement 10 répète ces mêmes étapes 102, 104, 106, 108, 110, 112 dans de nouvelles itérations du filtre de Kalman invariant. L'état estimé au cours de l'étape de propagation 112 d'une itération donnée est utilisé comme donnée d'entrée des étapes de calcul d'innovation 104 et de mise à jour non linéaire 110 d'une itération suivante.

En définitive, grâce au procédé 100, le véhicule principal 1 peut obtenir une aide non seulement sur sa propre navigation, mais également sur la navigation du véhicule secondaire 2, sur la base des différentes données mesurées par le premier capteur 3 et les capteurs proprioceptifs 6, 16.

Un procédé 200 d'aide à la navigation de la flotte selon un deuxième mode de réalisation, et mettant en œuvre un filtre de Kalman invariant également configuré de la manière indiquée ci-dessus, est également montré en partie droite de la figure 3 ; ce procédé 200 comprend les étapes suivantes.

Dans une étape d'acquisition 202, des données $Y_2$ de mouvement du véhicule principal 1 dans au moins un repère attaché à un objet extérieur au véhicule principal sont acquises. Ces données $Y_2$ peuvent comprendre :

- des données cinématiques du véhicule principal 1 dans le repère secondaire acquises par le deuxième capteur 12, par exemple des données de position du véhicule principal 1 dans le repère secondaire (auquel cas l'objet extérieur correspondant est le véhicule secondaire)
- des données acquises par le récepteur 8 (l'objet correspondant peut alors être considéré comme étant la Terre, puisque ces données permettent de géolocaliser le véhicule principal par rapport à la Terre).

Ces données $Y_2$ sont transmises au véhicule principal 1, le cas échéant via les interfaces de communication 14 et 4 lorsqu'elles proviennent du véhicule secondaire 2. Les données $Y_2$ sont transmises à l'unité de traitement 10.

Dans une étape 204 similaire à l'étape 104, l'unité de traitement 10 calcule la différence (innovation $Z_2$) entre

les mesures observées $Y_2$ et des mesures attendues. Les mesures attendues sont déduites d'un état précédemment estimé par le filtre de Kalman invariant, noté $\hat{X}_2$.

Dans une étape de correction 206, l'unité de traitement 10 multiplie l'innovation $Z_2$ par une matrice de gain $K_2$ ce qui traduit $Z_2$ en une correction linéaire $dx_2 = K_2 Z_2$ à appliquer à l'état du système.

Cette étape de correction 206 est similaire à l'étape 106, à la différence près que la matrice $K_2$ de gain est choisie de manière à stabiliser une deuxième variable d'erreur non linéaire e définie par :

$$e = X^{-1} * \hat{X}_2$$

Dans une étape de rétraction 208 identique à l'étape 108, l'unité de traitement 10 transforme la correction linéaire $dx_2$ en une correction non linéaire $C_2$ de même nature que $\hat{X}_2$ (l'état $\hat{X}_2$ n'est pas un vecteur car il contient des rotations).

Est ensuite mise en œuvre par l'unité de traitement 10 une étape de mise à jour non linéaire 210 similaire à l'étape 110. Dans cette étape 210, l'unité de traitement 10 combine l'estimation $\hat{X}_2$ de l'état du système à la correction non linéaire $C_2$ pour construire une estimation corrigée de la manière suivante :

$$\hat{X}_2^+ = \hat{X}_2 * C_2$$

Dans une étape de propagation 212 identique à l'étape 112, l'unité de traitement 10 génère un état propagé à partir de l'état $\hat{X}_2^+$.

Les étapes décrites précédemment forment une itération du filtre de Kalman invariant.

L'unité de traitement 10 répète ces mêmes étapes 202, 204, 206, 208, 210, 212 dans de nouvelles itérations du filtre de Kalman invariant. L'état estimé au cours de l'étape de propagation 212 d'une itération donnée est utilisé comme donnée d'entrée des étapes de calcul d'innovation 204 et de mise à jour non linéaire 210 d'une itération suivante.

Comme dans le procédé 100 selon le premier mode de réalisation, la dépendance de l'évolution de l'erreur par rapport à l'état du système est réduite.

L'un ou l'autre des procédés 100, 200 décrits ci-dessus peut être mis en œuvre par le véhicule principal 1.

La différence fondamentale entre le procédé 100 selon le premier mode de réalisation et le procédé 200 selon le deuxième mode de réalisation réside dans les données cinématiques relatives entre le véhicule principal 1 et le véhicule secondaire 2 utilisées comme observation par le filtre de Kalman invariant: dans le cas du procédé 100, ces données sont exprimées dans le repère attaché au véhicule principal 1, alors que dans le cas du procédé 200, ces données sont exprimées dans un repère extérieur.

L'unité de traitement 10 du véhicule principal 1 met avantageusement en œuvre un procédé selon un troisième mode de réalisation, combinant la mise en œuvre des deux procédés qui précèdent 100 et 200, en parallèle.

Le premier procédé 100 conduisant à l'obtention de la donnée $\hat{X}_1^+$ est par exemple mis en œuvre par un premier processeur de l'unité de traitement 10, tandis que le deuxième procédé 200 conduisant à l'obtention de la donnée $\hat{X}_2^+$ est mis en œuvre par un deuxième processeur de l'unité de traitement. Autrement dit, deux filtres de Kalman invariants sont mis en œuvre en parallèle par ces deux processeurs.

Dans une étape de fusion 302, l'unité de traitement 10 fusionne les données $\hat{X}_1^+$ et $\hat{X}_2^+$ afin d'obtenir une estimation optimisée de l'état de navigation de la flotte, notée $X_{opt}^+$. Par exemple, $X_{opt}^+$ est la moyenne de $\hat{X}_1^+$ et $\hat{X}_2^+$. Les états $\hat{X}_1^+$ et $\hat{X}_2^+$ n'étant pas des vecteurs, on remplace leur moyenne classique par une quelconque définition de moyenne adaptée aux variétés. L'homme du métier pourra trouver des définitions de moyenne généralisées à des variétés dans le document Markley, F. L., Cheng, Y., Crassidis, J. L., & Oshman, Y. (2007). Averaging quaternions. Journal of Guidance, Control, and Dynamics, 30(4), 1193-1197.

Le cas échéant, cette moyenne est pondérée par des matrices de covariance associées aux données $\hat{X}_1^+$ et $\hat{X}_2^+$ exprimant l'incertitude de ces estimations. Ces matrices de covariances sont également produites par les deux filtres de Kalman invariants des procédés 100 et 200.

L'invention ne se limite pas aux modes de réalisation précédemment décrits.

Il est possible d'inclure dans l'état de navigation de la flotte des vitesses ou les vecteurs représentant les positions de points caractéristiques $q_i$ (ou amers). Cet état de navigation peut se borner à comprendre des données de position et de rotations.

Par ailleurs, la flotte de véhicules considérée peut comprendre plusieurs véhicules secondaires, et l'état de navigation être étendu de sorte à comprendre des éléments propres à chacun des véhicules secondaires de la flotte.

En outre, il n'est pas obligatoire d'utiliser des données inertielles acquises par une centrale inertielle au cours de la mise en œuvre de l'un ou l'autre des procédés décrits ci-dessus. Néanmoins, quand des telles données inertielles sont utilisées, l'état du système doit comporter des états représentatifs de la vitesse de chaque véhicule muni d'une centrale inertielle. Il s'agira :

- de la vitesse $v_p$ du véhicule principal dans le repère de référence,
- de l'écart $v_{sp}$ de vitesse, par rapport au repère fixe, entre les eux véhicules, projeté dans le repère attaché au véhicule secondaire. Pour dire les choses autrement $v_{sp}$ est définie par

$$v_{sp} = R_s^T \left( v_p - v_s \right)$$

Où $v_p$ est la vitesse du porteur principal dans le repère fixe, $v_s$ la vitesse du porteur secondaire dans le repère fixe et $R_s = R_p R_{sp}^T$ la matrice de rotation permettant le passage des coordonnées d'un point dans le repère secondaire à ses coordonnées dans le repère fixe. Un seul de ces deux états peut aussi être ajouté au système.

Il est à noter que l'état de navigation pourrait, dans un autre mode de réalisation être formé par les variables naturelles $(R_p, x_p, R_s, x_s)$, où la matrice de rotation $R_s$ et le vecteur $x_s \in \mathbb{R}^3$ sont tels qu'un point de coordonnées $u \in \mathbb{R}^3$ dans le repère attaché au véhicule secondaire aura les coordonnées $R_s u + x_s$ dans le repère fixe. Dans ce cas, la loi de composition interne à utiliser est plus complexe :

$$\left( R_p, x_p, R_s, x_s \right) * \left( R'_p, x'_p, R'_s, x'_s \right) = \begin{pmatrix} R_p R'_p \\ x_p + R_p x'_p \\ R_p R'_s R_p^T R_s \\ R_p R'_s R_p^T \left( x_s - x_p \right) + R_p x'_s + x_p \end{pmatrix}$$

## Revendications

1. Procédé d'aide à la navigation d'une flotte de véhicules comprenant un véhicule principal (1) et un véhicule secondaire (2) mobile par rapport au véhicule principal (1), le procédé comprenant des étapes de :

   • réception de données ($Y_1$, $Y_2$) acquises par au moins un capteur (2, 12), les données reçues comprenant des données cinématiques relatives entre le véhicule principal (1) et le véhicule secondaire (2),
   • estimation (100, 200) d'un état de navigation de la flotte de véhicules par un filtre de Kalman invariant utilisant les données reçues ($Y_1$, $Y_2$) comme observations, **caractérisé en ce que** l'état de navigation comprend

      o des premières variables représentatives d'une première transformation rigide liant un repère attaché au véhicule principal (1) à un repère de référence et
      o des deuxièmes variables représentatives d'une deuxième transformation rigide liant un repère attaché au véhicule principal (1) à un repère attaché au véhicule secondaire (2),

   et dans lequel le filtre de Kalman invariant utilise comme loi de composition interne une loi comprenant une composition terme à terme de la première transformation rigide et de la deuxième transformation rigide.

2. Procédé selon la revendication précédente, dans lequel l'état de navigation de la flotte comprend en outre au moins un état d'erreur propre au capteur (2, 12), et dans lequel la loi de composition interne est additive pour cet état d'erreur propre au capteur.

**3.** Procédé selon l'une des revendications précédentes, comprenant la réception de données de mouvement proprioceptif du véhicule principal (1) et du véhicule secondaire (2), dans lequel l'estimation comprend des phases de

• propagation (112, 212) d'un état de navigation de la flotte préalablement estimé par le filtre de Kalman invariant à l'aide des données de mouvement proprioceptif du véhicule principal (1) et du véhicule secondaire (2) pour obtenir un état propagé,
• mise à jour (110, 210) de l'état propagé à l'aide des observations, pour obtenir un nouvel état de navigation de la flotte.

**4.** Procédé selon les revendications précédentes, dans lequel les données de mouvement proprioceptif sont acquises par des capteurs proprioceptifs respectifs du véhicule principal (1) et du véhicule secondaire (2), et l'état de navigation de la flotte comprend en outre au moins un état d'erreur propre à au moins un des capteurs proprioceptifs pour laquelle la loi de composition interne est additive.

**5.** Procédé selon l'une des revendications précédentes, dans lequel

• les premières variables comprennent une matrice de rotation représentant une orientation du véhicule principal (1) et un vecteur de position du véhicule principal (1), et
• dans lequel les deuxièmes variables comprennent une matrice de rotation représentant l'orientation du véhicule principal (1) par rapport au véhicule secondaire (2) et un vecteur de position du véhicule principal (1) par rapport au véhicule secondaire (2).

**6.** Procédé selon la revendication précédente, dans lequel :

• l'état de navigation de la flotte comprend en outre un vecteur de vitesse $v_p$ du véhicule principal dans le repère de référence, et un vecteur de vitesse égal à $R_S^T(v_P - v_S)$, où $v_s$ est une vitesse du véhicule secondaire dans le repère de référence, et $R_S$ est une matrice de rotation représentant l'orientation du véhicule secondaire (2) par rapport au repère de référence,
• la loi de composition interne applique des transformations identiques à l'un des vecteurs de position et l'un des vecteurs vitesse.

**7.** Procédé selon l'une des revendications précédentes, dans lequel l'estimation est mise en œuvre par le véhicule principal (1), et les données reçues comprennent des données de position du véhicule secondaire (2) dans un repère fixé au véhicule principal (1) acquises par au moins un premier capteur (3) du véhicule principal (1) comprenant par exemple un lidar, une caméra.

**8.** Procédé selon l'une des revendications précédentes, dans lequel l'estimation est mise en œuvre par le véhicule principal (1), et les données reçues comprennent des données de position du véhicule principal (1) dans un repère fixé au véhicule secondaire (2) acquises par au moins un deuxième capteur (12) du véhicule secondaire (2) comprenant par exemple un lidar, une caméra.

**9.** Procédé selon l'une des revendications précédentes, dans lequel les données reçues comprennent des données cinématiques relatives entre le véhicule principal (1) et un objet tiers distinct du véhicule principal (1) et du véhicule secondaire (2), les données cinématiques relatives entre le véhicule principal (1) et l'objet tiers étant également utilisées comme observations par le filtre de Kalman invariant.

**10.** Procédé selon la revendication 6, dans lequel l'objet tiers est un amer.

**11.** Procédé selon l'une des revendications 9 et 10, dans lequel les données cinématiques relatives entre le véhicule principal (1) et un objet tiers comprennent des données acquises par un récepteur GPS/GNSS (8) du véhicule principal (1).

**12.** Procédé selon l'une des revendications 7 et 8 prises en combinaison, comprenant des étapes des

• mise en œuvre (100) de l'étape d'estimation sur la base des données de position de l'objet secondaire dans le repère fixé au véhicule principal (1) de sorte générer une première estimation $(X_1^+)$ de l'état de navigation de la flotte,

• mise en œuvre (200) de l'étape d'estimation sur la base des données de position du véhicule principal (1) dans un repère fixé à l'objet secondaire, de sorte générer une deuxième estimation $(X_2^+)$ de l'état de navigation de la flotte,

• fusion des première et deuxième estimations $(X_1^+, X_2^+)$ de l'état de navigation de la flotte, de sorte à produire une troisième estimation $(X_{opt}^+)$ de l'état de navigation la flotte, la fusion comprenant par exemple le calcul d'une moyenne des première et deuxième estimations de l'état de navigation de l'ensemble d'objets.

**13.** Procédé selon l'une des revendications précédentes, dans lequel :

• les données reçues utilisées comme observations s'écrivent comme un vecteur $Y_1$ de la forme $Y_1 = l(X_1, y_0)$, où $l(.,.)$ est une action de groupe à gauche pour la loi de composition interne, $X_1$ est l'état de navigation de la flotte, et $y_0$ est un vecteur de même dimension que $Y_1$, et dans lequelle filtre de Kalman invariant utilise une innovation $Z = l(\hat{X}_1^{-1}, Y_1)$ , ou dans lequel

• les données reçues utilisées comme observations s'écrivent comme un vecteur $Y_2$ de la forme $Y_2 = l(X_2^{-1}, y_0))$ où $l(.,.)$ est une action de groupe à gauche pour la loi de composition interne, $X_2$ est l'état de navigation de la flotte, et $y_0$ est un vecteur de même dimension que $Y_2$, et dans lequel où le filtre de Kalman invariant utilise une innovation $Z = l(\hat{X}_2, Y_2)$.

**14.** Dispositif d'aide à la navigation d'une flotte de véhicules comprenant un véhicule principal (1) et un véhicule secondaire (2) mobile par rapport au véhicule principal (1), le dispositif comprenant :

• une interface de réception (3, 4) pour recevoir des données $(Y_1, Y_2)$ acquises par au moins un capteur, les données comprenant des données cinématiques relatives entre le véhicule principal (1) et le véhicule secondaire (2),
• une unité de traitement (1) configurée pour mettre en œuvre un filtre de Kalman invariant de manière à estimer un état de navigation de la flotte de véhicules, dans lequel le filtre de Kalman invariant est configuré pour utiliser les données reçues comme observations, **caractérisé en ce que** l'état

de navigation comprend des premières variables représentatives d'une première transformation rigide liant un repère attaché au véhicule principal (1) à un repère de référence et des deuxièmes variables représentatives d'une deuxième transformation rigide liant un repère attaché au véhicule principal (1) à un repère attaché au véhicule secondaire (2), et dans lequel le filtre de Kalman invariant est configuré pour utiliser comme loi de composition interne une composition terme à terme de la première transformation rigide et de la deuxième transformation rigide.

**Patentansprüche**

**1.** Verfahren zur Unterstützung bei der Navigation einer Flotte von Fahrzeugen, umfassend ein Hauptfahrzeug (1) und ein Nebenfahrzeug (2), das in Bezug auf das Hauptfahrzeug (1) mobil ist, wobei das Verfahren die Schritte umfasst:

• Empfangen von Daten $(Y_1, Y_2)$, die durch wenigstens einen Sensor (2, 12) erfasst werden, wobei die empfangenen Daten relative kinematische Daten zwischen dem Hauptfahrzeug (1) und dem Nebenfahrzeug (2) umfassen,
• Schätzung (100, 200) eines Navigationszustandes der Flotte von Fahrzeugen durch einen invarianten Kalman-Filter, der die empfangenen Daten $(Y_1, Y2)$ als Beobachtungen verwendet,

**dadurch gekennzeichnet, dass** der Navigationszustand umfasst

o erste Variable, die eine erste steife Transformation darstellen, die eine am Hauptfahrzeug (1) befestigte Markierung mit einer Referenzmarkierung verbindet, und

o zweite Variable, die eine zweite steife Transformation darstellen, die eine am Hauptfahrzeug (1) befestigte Markierung mit einer am Nebenfahrzeug (2) befestigten Markierung verbindet,

und bei dem der invariante Kalman-Filter als Gesetz der internen Zusammensetzung verwendet, das eine Zusammensetzung Stück für Stück der ersten steifen Transformation und der zweiten steifen Transformation umfasst.

2. Verfahren gemäß dem voranstehenden Anspruch, bei dem der Navigationszustand der Flotte darüber hinaus wenigstens einen, dem Sensor (2, 12) eigenen Fehlerzustand umfasst und bei dem das Gesetz der internen Zusammensetzung für diesen, dem Sensor eigenen Fehlerzustand additiv ist.

3. Verfahren gemäß einem der voranstehenden Ansprüche, umfassend den Empfang von propriorezeptiven Bewegungsdaten des Hauptfahrzeugs (1) und des Nebenfahrzeugs (2), bei dem die Schätzung Phasen umfasst:

   • Verbreitung (112, 212) eine Navigationszustandes der Flotte, der zuvor durch den invarianten Kalman-Filter mithilfe der propriorezeptiven Bewegungsdaten des Hauptfahrzeugs (1) und des Nebenfahrzeugs (2) geschätzt wurde, um einen verbreiteten Zustand zu erhalten,
   • Aktualisierung (110, 210) des verbreiten Zustandes mithilfe von Beobachtungen, um einen neuen Navigationszustand der Flotte zu erhalten.

4. Verfahren gemäß den voranstehenden Ansprüchen, bei dem die propriorezeptiven Bewegungsdaten durch jeweilige propriorezeptive Sensoren des Hauptfahrzeugs (1) und des Nebenfahrzeugs (2) erfasst werden und der Navigationszustand der Flotte darüber hinaus wenigstens einen wenigstens einem der propriorezeptiven Sensoren eigenen Fehlerzustand umfasst, für den das Gesetz der internen Zusammensetzung additiv ist.

5. Verfahren gemäß einem der voranstehenden Ansprüche, bei dem

   • die ersten Variablen eine Rotationsmatrix umfassen, die eine Ausrichtung des Hauptfahrzeugs (1) und einen Positionsvektor des Hauptfahrzeugs (1) darstellen, und
   • bei dem die zweiten Variablen eine Rotationsmatrix umfassen, die die Ausrichtung des Hauptfahrzeugs (1) in Bezug auf das Nebenfahrzeug (2) und einen Positionsvektor des Hauptfahrzeugs (1) in Bezug auf das Nebenfahrzeug (2) darstellen.

6. Verfahren gemäß dem voranstehenden Anspruch, bei dem:

   • der Navigationszustand der Flotte darüber hinaus einen Geschwindigkeitsvektor $v_p$ des Hauptfahrzeugs in der Referenzmarkierung und einen Geschwindigkeitsvektor gleich $R_S^T(v_P - v_S)$ umfasst, wobei $v_s$ eine Geschwindigkeit des Nebenfahrzeugs in der Referenzmarkierung ist und $R_S$ eine Rotationsmatrix ist, die die Ausrichtung des Nebenfahrzeugs (2) in Bezug auf die Referenzmarkierung darstellt,
   • das Gesetz der internen Zusammensetzung auf den einen der Positionsvektoren und einen der Geschwindigkeitsvektoren identische Transformationen anwendet.

7. Verfahren gemäß einem der voranstehenden Ansprüche, bei dem die Schätzung durch das Hauptfahrzeug (1) umgesetzt wird und die empfangenen Daten Positionsdaten des Nebenfahrzeugs (2) in einer am Hauptfahrzeug (1) befestigten Markierung empfangene Daten umfassen, die von wenigstens einem ersten Sensor (3) des Hauptfahrzeugs 81) erfasst werden, umfassend z. B. ein LIDAR, eine Kamera.

8. Verfahren gemäß einem der voranstehenden Ansprüche, bei dem die Schätzung durch das Hauptfahrzeug (1) umgesetzt wird und die empfangenen Daten Positionsdaten des Hauptfahrzeugs (1) in einer am Nebenfahrzeug (2) befestigten Markierung empfangene Daten umfassen, die von wenigstens einem zweiten Sensor (12) des Nebenfahrzeugs (2) erfasst werden, umfassend zum Beispiel ein LIDAR, eine Kamera.

9. Verfahren gemäß einem der voranstehenden Ansprüche, bei dem die empfangenen Daten relative kinematische Daten zwischen dem Hauptfahrzeug (1) und einem vom Hauptfahrzeug (1) unterschiedlichen Fremdobjekt und dem Nebenfahrzeug (2) umfassen, wobei die relativen kinematischen Daten zwischen dem Hauptfahrzeug (1) und dem Fremdobjekt vom invarianten Kalman-Filter ebenfalls als Beobachtungen verwendet werden.

**10.** Verfahren Anspruch 6, bei dem das Fremdobjekt eine Bake ist.

**11.** Verfahren gemäß einem der Ansprüche 9 und 10, bei dem die relativen kinematischen Daten zwischen dem Hauptfahrzeug (1) und einem Fremdobjekt Daten umfassen, die von einem Sensor GPS/GNSS (8) des Hauptfahrzeugs (1) erfasst werden.

**12.** Verfahren gemäß einem der Ansprüche 7 und 8 in Kombination, umfassend Schritte

• Umsetzung (100) des Schätzungsschritts auf der Grundlage der Positionsdaten des Nebenobjekts in der am Hauptfahrzeug (1) befestigten Markierung derart, dass eine erste Schätzung $(X_1^+)$ des Navigationszustandes der Flotte erzeugt wird,

• Umsetzung (200) des Schätzungsschritts auf der Grundlage der Positionsdaten des Hauptfahrzeugs (1) in einer am Nebenfahrzeug befestigten Markierung derart, dass eine zweite Schätzung $(X_2^+)$ des Navigationszustandes der Flotte erzeugt wird,

• Zusammenführung der ersten und der zweiten Schätzung $(X_1^+, \; X_2^+)$ des Navigationszustandes der Flotte derart, dass eine dritte Schätzung $(X_{opt}^+)$ des Navigationszustandes der Flotte produziert wird, wobei die Zusammenführung zum Beispiel die Berechnung eines Durchschnitts der ersten und der zweiten Schätzung des Navigationszustandes der Objektgruppe umfasst.

**13.** Verfahren gemäß einem der voranstehenden Ansprüche, bei dem:

• die empfangenen, als Beobachtungen verwendeten Daten als ein Vektor $Y_1$ der Form $Y_1 = l(X_1, y_0)$ geschrieben werden, wobei l( ...) eine Gruppenaktion links für das Gesetz der internen Zusammensetzung ist, $X_1$ der Navigationszustand der Flotte ist und $y_0$ ein Vektor mit derselben Dimension ist wie $Y_1$ und bei dem der invariante Kalman-Filter eine Innovation $Z = l\left(\hat{X}_1^{-1}, Y_1\right)$ verwendet, oder bei der

• die empfangenen, als Beobachtungen verwendeten Daten als ein Vektor $Y_2$ der Form $Y_2 = l(X_2^{-1}, y_0))$ geschrieben werden, wobei l(...) eine Gruppenaktion links für das Gesetz der internen Zusammensetzung ist, $X_2$ der Navigationszustand der Flotte ist und $y_0$ ein Vektor mit derselben Dimension ist wie $Y_2$ und bei dem der invariante Kalman-Filter eine Innovation $Z = l(\hat{X}_2, Y_2)$ verwendet.

**14.** Vorrichtung zur Unterstützung bei der Navigation einer Flotte von Fahrzeugen, umfassend ein Hauptfahrzeug (1) und ein Nebenfahrzeug (2), das in Bezug auf das Hauptfahrzeug (1) mobil ist, wobei die Vorrichtung umfasst:

• eine Empfangsschnittstelle (3, 4) zum Empfangen der Daten $(Y_1, Y_2)$, die durch wenigstens einen Sensor empfangen sind, wobei die Daten relative kinematische Daten zwischen dem Hauptfahrzeug (1) und dem Nebenfahrzeug (2) umfassen,
• eine Verarbeitungseinheit (1), die zum Umsetzen eines invarianten Kalman-Filters derart ausgestaltet ist, dass ein Navigationszustand der Flotte von Fahrzeugen geschätzt ist, in dem der invariante Kalman-Filter zum Verwenden der als Beobachtungen empfangenen Daten ausgestaltet ist, **dadurch gekennzeichnet, dass** der Navigationszustand erste Variable, die eine erste steife Transformation darstellen, die eine am Hauptfahrzeug (1) befestigte Markierung mit einer Referenzmarkierung verbindet, und zweite Variable, die eine zweite steife Transformation darstellen, die eine am Hauptfahrzeug (1) befestigte Markierung mit einer am Nebenfahrzeug (2) befestigten Markierung verbindet, umfasst, und bei der der invariante Kalman-Filter ausgestaltet ist, um eine Zusammensetzung von Term zu Term der ersten steifen Transformation und der zweiten steifen Transformation als Gesetz der internen Zusammensetzung zu verwenden.

**Claims**

**1.** Method for assisting with the navigation of a fleet of vehicles comprising a main vehicle (1) and a secondary vehicle (2) that is mobile in relation to the main vehicle (1), the method comprising the steps of:

• receiving data ($Y_1$, $Y_2$) acquired by at least one sensor (2, 12), the data received comprising relative movement data between the main vehicle (1) and the secondary vehicle (2),
• estimating (100, 200) a navigation status of the fleet of vehicles by an invariant Kalman filter using the received data ($Y_1$, $Y_2$) as observations, **characterised in that** the navigation status comprises

o first variables representing a first rigid transformation linking a location mark associated with the main vehicle (1) to a reference point and
o second variables representing a second rigid transformation linking a location mark associated with the main vehicle (1) to a mark associated with the secondary vehicle (2),

and wherein the invariant Kalman filter uses, as an internal composition law, a law comprising a term-by-term composition of the first rigid transformation and the second rigid transformation.

2. Method according to the preceding claim, wherein the navigation status of the fleet further comprises at least one error status specific to the sensor (2, 12), and wherein the internal composition law is additive for this error status specific to the sensor.

3. Method according to one of the preceding claims, comprising the receiving of proprioceptive movement data from the main vehicle (1) and from the secondary vehicle (2), wherein the estimating comprises phases of

• propagating (112, 212) a navigation status of the fleet estimated beforehand by the invariant Kalman filter using proprioceptive movement data from the main vehicle (1) and from the secondary vehicle (2) in order to obtain a propagated status,
• updating (110, 210) of the propagated status using observations, in order to obtain a new navigation status of the fleet.

4. Method according to the preceding claims, wherein the proprioceptive movement data is acquired by respective proprioceptive sensors from the main vehicle (1) and from the secondary vehicle (2), and the navigation status of the fleet further comprises at least one error status specific to at least one of the proprioceptive sensors for which the internal composition law is additive.

5. Method according to one of the preceding claims, wherein

• the first variables comprise a rotation matrix representing an orientation of the main vehicle (1) and a position vector of the main vehicle (1), and
• wherein the second variables comprise a rotation matrix representing the orientation of the main vehicle (1) with respect to the secondary vehicle (2) and a position vector of the main vehicle (1) with respect to the secondary vehicle (2).

6. Method according to the preceding claim, wherein:

• the navigation status of the fleet further comprises a speed vector $v_p$ of the main vehicle in the reference point, and a speed vector equal to $R_S^T (v_P - v_S)$ , where $v_s$ is a speed of the secondary vehicle in the reference point, and $R_S$ is a rotation matrix representing the orientation of the secondary vehicle (2) with respect to the reference point,
• the internal composition law applies identical transformations to one of the position vectors and one of the speed vectors.

7. Method according to one of the preceding claims, wherein the estimating is implemented by the main vehicle (1), and the data received comprises position data from the secondary vehicle (2) in a mark fixed to the main vehicle (1) acquired by at least one first sensor (3) of the main vehicle (1) comprising for example a lidar, a camera.

8. Method according to one of the preceding claims, wherein the estimating is implemented by the main vehicle (1), and the data received comprises position data from the main vehicle (1) in a mark fixed to the secondary vehicle (2) acquired by at least one second sensor (12) of the secondary vehicle (2) comprising for example a lidar, a camera.

9. Method according to one of the preceding claims, wherein the data received comprises relative movement data between the main vehicle (1) and a distinct third-party object of the main vehicle (1) and of the secondary vehicle (2), the relative movement data between the main vehicle (1) and the third-party object also being used as observations by the invariant Kalman filter.

10. Method according to claim 6, wherein the third-party object is a daymark.

11. Method according to one of claims 9 and 10, wherein the relative movement data between the main vehicle (1) and a third-party object comprises data acquired by a GPS/GNSS receiver (8) of the main vehicle (1) .

12. Method according to one of claims 7 and 8 taken in combination, comprising steps of

• implementing (100) the step of estimating based on position data of the secondary object in the mark fixed to the main vehicle (1) in such a way as to generate a first estimation $(X_1^+)$ of the navigation status of the fleet,
• implementing (200) the step of estimating based on position data of the main vehicle (1) in a mark fixed to the secondary object, in such a way as to generate a second estimation $(X_2^+)$ of the navigation status of the fleet,
• merging the first and second estimations $(X_1^+, X_2^+)$ of the navigation status of the fleet, in such a way as to produce a third estimation $(X_{opt}^+)$ of the navigation status of the fleet, the merging comprising for example the calculation of an average of the first and second estimations of the navigation status of all the objects.

13. Method according to one of the preceding claims, wherein:

• the received data used as observations is written as a vector $Y_1$ of the form $Y_1 = l(X_1, y_0)$, where $l(.,.)$ is a left group action for the internal composition law, $X_1$ is the navigation status of the fleet, and $y_0$ is a vector of the same dimension as $Y_1$, and wherein the invariant Kalman filter uses an innovation $Z = l(\hat{X}_1^{-1}, Y_1)$ , or wherein

• the data received used as observations is written as a vector $Y_2$ of the form $Y_2 = l(X_2^{-1}, y_0)$ where $l(.,.)$ is a left group action for the internal composition law, $X_2$ is the navigation status of the fleet, and $y_0$ is a vector of the same dimension as $Y_2$, and wherein the invariant Kalman filter uses an innovation $Z = l(\hat{X}_2, Y_2)$.

14. Device for assisting with the navigation of a fleet of vehicles comprising a main vehicle (1) and a secondary vehicle (2) that is mobile in relation to the main vehicle (1 ), the device comprising:

• a receiving interface (3, 4) for receiving data ($Y_1$, $Y_2$) acquired by at least one sensor, the data comprising relative movement data between the main vehicle (1) and the secondary vehicle (2),
• a processing unit (1) configured to implement an invariant Kalman filter in such a way as to estimate a navigation status of the fleet of vehicles, wherein the invariant Kalman filter is configured to use the data received as observations,

**characterised in that** the navigation status comprises first variables representing a first rigid transformation linking a location mark associated with the main vehicle (1) to a reference point and second variables representing a second rigid transformation linking a location mark associated with the main vehicle (1) to a mark associated with the secondary vehicle (2), and wherein the invariant Kalman filter is configured to use as an internal composition law a term-by-term composition of the first rigid transformation and of the second rigid transformation.

FIG. 1

FIG. 2

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BONNABEL, S. ; MARTIN, P. ; SALAÜN, E.** Invariant Extended Kalman Filter: theory and application to a velocity-aided attitude estimation problem. *Decision and Control, 2009 held jointly with the 2009 28th Chinese Control Conference. CDC/CCC 2009. Proceedings of the 48th IEEE Conférence,* Décembre 2009, 1297-1304
- **BARRAU, A. ; BONNABEL, S.** The invariant extended Kalman filter as a stable observer. *IEEE Transactions on Automatic Control,* 2017, vol. 62 (4), 1797-1812
- **BARRAU, A. ; BONNABEL, S.** *An EKF-SLAM algorithm with consistency properties,* 2015
- **BARRAU, A. ; BONNABEL, S.** *Linear observation systems on groups (I),* 2017
- **ZOU, D. ; TAN, P.** Coslam: Collaborative visual slam in dynamic environments. *IEEE transactions on pattern analysis and machine intelligence,* 2013, vol. 35 (2), 354-366
- **SOLMAZ S KIA et al.** *Coopérative localization for mobile agents: a recursive decentralized algorithm based on Kalman filter decoupling,* 21 Mai 2015
- **MARKLEY, F. L. ; CHENG, Y. ; CRASSIDIS, J. L. ; OSHMAN, Y.** Averaging quaternions. *Journal of Guidance, Control, and Dynamics,* 2007, vol. 30 (4), 1193-1197